# EUROPÄISCHE PATENTSCHRIFT

(11) **EP 0 365 757 B1**
(45) Veröffentlichungstag und Bekanntmachung des Hinweises auf die Patenterteilung: **24.02.1993**
(21) Anmeldenummer: 89112935.5
(22) Anmeldetag: 14.07.1989
(51) Int. Cl.: B22D 11/00, F16H 53/02

(54) **Verfahren zur Herstellung von Einzelnocken aus Gusswerkstoff**
Method of producing cams from a casting material
Procédé de fabrication de cames à partir d'une matière coulée

(30) Priorität: 25.10.1988 DE 3836328
(43) Veröffentlichungstag der Anmeldung: 02.05.1990
(73) Patentinhaber: Emitec Gesellschaft für Emissionstechnologie mbH, 53797 Lohmar (DE)
(72) Erfinder: Swars, Helmut, D-5060 Bergisch Gladbach (DE)
(74) Vertreter: Meissner, Peter E., Dipl.-Ing.

(56) Entgegenhaltungen:
- DE-U- 8 525 769
- GB-A- 2 187 405
- US-A- 3 841 390
- WERKSTATT UND BETRIEB, Band 115, Nr. 10, Oktober 1982, Seiten 672-674, München, DE; W. KLEIN: "Stranggegossene Werkstücke mit Lamellen- und Kugelgraphit"

## Beschreibung

Die Erfindung betrifft ein Verfahren zur Herstellung von Einzelnocken für gebaute Nockenwellen, bei dem eine Stange mit dem Querschnitt einer Nocke hergestellt wird, von der einzelne Nocken abgetrennt werden.

Aufgebaute Nockenwellen, bei denen für den Wellengrundkörper Rohre verwendet werden können, sind aus Gewichtsgründen vorteilhaft. Hierbei sind Stahlnocken unabhängig vom Befestigungsverfahren, d. h. zum Beispiel beim Schrumpfen, hydraulischen Verformen des Rohres oder anderen Verfahren, bezüglich der Herstellung der Verbindung unproblematisch, weisen jedoch in der Regel für bestimmte Nockenfolger, abhängig vom Material der Tassenstößel oder Kipphebel, tribologisch nicht die günstigsten Werte auf. Auf der anderen Seite sind Gußnocken bezüglich ihrer Laufeigenschaften, insbesondere bei harter, verschleißfester Randschicht gut geeignet, stellen jedoch ein Problem im Hinblick auf die Rißgefahr bei der Herstellung der Verbindung dar. Letzteres gilt insbesondere für Nocken aus Schalenhartguß mit ledeburitischer Randschicht, die für das hydraulische Aufweiten zu spröde ist, so daß die Nocken bei plastischer Verformung des Rohres aufplatzen.

Besser geeignet sind Nocken aus Temperguß mit einer ledeburitischen Randschicht, die durch Umschmelzhärten erzeugt werden kann. Das hierfür erforderliche Verfahren ist jedoch zu aufwendig, so daß die Einzelnocken in der Herstellung zu teuer werden.

Gußnocken mit einem dehnfähigen Gefüge, das zum Beispiel Temperguß oder Kugelgraphitguß sein kann, bei denen eine hinsichtlich der Kosten vertretbare induktive Randschichthärtung erfolgt, weisen nach der Härtung nur eine martensitische Oberfläche auf, die in ihren tribologischen Eigenschaften im Vergleich mit der gewünschten legeburitischen Oberfläche nicht alle Anforderungen erfüllt.

Aus der GB 21 87 405 A, von welcher die Oberbegriffe der Ansprüche 1 und 9 ausgehen, ist ein Verfahren der eingangs genannten Art zur Herstellung von Einzelnocken bekannt, die später einzeln auf ein Rohr aufgeschoben und durch radiales Aufweiten des Rohrkörpers formschlüssig auf diesem festgelegt werden. Die Einzelnocken weisen dabei im wesentlichen über dem Umfang gleichbleibende Wandstärke auf. Nach dem angegebenen Herstellverfahren können solche Einzelnocken von einem gezogenem Rohr oder nach einer nach einem Extrusionsverfahren hergestellten Stange abgeschnitten werden. In beiden Fällen führt dabei ein plastisches Umformverfahren aus einem Vormaterial zum Erzeugnis mit fertigem Querschnitt. Aufgrund dieser Umformtechnik kann nicht gleichzeitig eine gehärtete Oberfläche erzeugt werden. Vielmehr ist ein Härteprozeß getrennt von der plastischen Umformung notwendig, wenn verschleißfeste Nocken entstehen sollen.

Aus der DE 85 25 769 U ist eine einstückige Nockenwelle aus Schalenhartguß bekannt, die mit Ausnahme eines Endflansches in allen Teilen im wesentlichen gleichmäßige Wandstärke aufweist. Aufgrund einer nicht eintretenden Rückerwärmung der Oberflächenbereiche soll sich fein dendritisches-ledeburititsches Gefüge ausbilden. Dies betrifft dann notwendigerweise auch die Stirnseite einzelner Nocken. Nach dieser Technik hergestellte einzelne Nocken wären wegen der gehärteten Stirnflächen, wie auch aufgrund ihrer Hohlform für eine kraftschlüssige Verbindung mit eingeschobenen und aufgeweiteten Rohren als Wellengrundkörper in keiner Weise geeignet.

Der vorliegenden Erfindung liegt, ausgehend hiervon, die Aufgabe zugrunde, ein Verfahren zur Herstellung von Einzelnocken aus Gußwerkstoff bereitzustellen, das, im Vergleich mit bekannten Verfahren, kostengünstig ist und Teile mit guten tribologischen Eigenschaften liefert. Die Lösung hierfür besteht in einem Verfahren der genannten Art, das sich dadurch auszeichnet, daß die Stange im Stranggußverfahren mit einem Kern aus Kugelgraphitguß von gleichmäßiger Dicke aber die gesamte Länge und einer ausschließlich den Umfang bildenden Randschicht gleichmäßiger Dicke aus Hartguß mit ledeburitischem Gefüge - insbesondere mit geringem Schleifaufmaß in Bezug zur fertigen Nocke - hergestellt wird und daß die einzelnen Nocken von der erstarrten Stange - bevorzugt mit Fertigmaß in Bezug auf die Breite - abgetrennt werden.

Ein derartiges Verfahren erfordert relativ geringe Anlageinvestitionen und ist imstande, Einzelnocken gleichbleibender Qualität bei hoher Fertigungsgeschwindigkeiten zu günstigen Kosten zu liefern. Das an sich bekannte Stranggußverfahren wird hierbei mit einer Anlage durchgeführt, bei der das Formmundstück dem Nockenprofil des fertigen Nockens, unter Berücksichtigung geringen Schleifaufmaßes, entspricht und bei dem das Formmundstück, das nach Art einer gekühlten Kokille aufgebaut ist, so temperiert wird, daß eine ledeburitische Randschicht entsteht. Die dabei entstehenden, in geeigneter Länge zu trennenden Stangen sind danach nur noch zu einzelnen Nocken in bestimmungsgemäßer Breite abzutrennen und nach dem Zusammenfügen mit der Nockenwelle zu schleifen. Für das Abtrennen werden bevorzugt Schmelzschnittschneidverfahren eingesetzt, die hohe Temperaturen durch extrem hohe Schnittgeschwindigkeiten erzeugen, wobei an die Werkzeugqualität keine besonderen Anforderungen gestellt sind.

Eine besondere Weiterbildung des erfindungsgemäßen Verfahrens besteht darin, daß die Stange nach dem Austritt aus dem Formmundstück, in dem die Abkühlung des Gußwerkstoffes soweit geführt wird, daß sich eine teigige Außenhaut an der Stange bildet, durch eine Pulverpackung aus Legierungselementen geführt wird, die in geeigneter Weise mit dem Werkstoff an der Oberfläche zu einer Auflegierung führt.

Als Legierungswerkstoffe kommen hierbei die Karbidbildner Mangan, Chrom, Silizium, Wolfram, Vanadium, Molybdän, Titan, Nickel, Tantal, Niob und Kohlenstoff in Betracht.

Im Anschluß an das Behältnis mit der Pulverpackung kann ein weiteres Formstück angeordnet werden, das in der Weise beheizt wird, daß das an der Stange haftenbleibende Pulver zur Legierungsbildung an der Oberfläche aufgeschmolzen wird.

An Stelle eines beheizten Formstückes kann auch ein Ziehring und/oder eine Walzenanordnung vorgesehen werden, in denen bei einem Nachverdichten an der Oberfläche ein Aufsintern und Verdichten der Sinterschicht stattfindet.

Der Kugelgraphitguß des Grundmaterials sowie die geeignete Ausbildung der ledeburitischen Randschicht der Stange wird durch die bekannten Beigaben zum flüssigen Werkstoff, durch das sogenannte Impfen erzeugt.

Für die Zwecke des Verbindens nach dem Prinzip des hydraulischen Aufweitens sind besonders nach dem erfindungsgemäßen Verfahren hergestellte Einzelnocken geeignet, die im Grundmaterial eine Streckgrenze von ≧ 500 N/mm² und einer Bruchdehnung von ≧ 2 % aufweisen. Weitere günstige Merkmale bestehen darin, daß die Randschicht eine Härte von ≧ 48 HRC und eine Dicke von 0,5 bis 2 mm hat und daß der Übergangsbereich zwischen dem dehnfähigen Grundgefüge aus GGG und der harten ledeburitischen Randschicht auf einen engen Bereich von ≦ 0,5 mm Dicke begrenzt ist. Die Nocken werden aus Stangen hergestellt, die gegenüber dem fertigen Nocken ein nur geringes Schleifaufmaß von ≦ 0,5 mm aufweisen. Die mechanischen Bearbeitungsvorgänge werden hierdurch auf ein Mindestmaß reduziert. Die auflegierte Laufschicht, die einen hohen Gehalt harter Mischkarbide aufweist, erzeugt eine sehr gute Verschleißfestigkeit der Nocken, die die Verformbarkeit des Grundmaterials zum hydraulischen Festlegen auf einem aufgeweiteten Rohr nicht beeinträchtigt. Der Verbrauch an Legierungselementen, die auch als Pulvermischungen zugeführt werden können, ist außerordentlich gering, so daß sich im Gegensatz zu durchlegierten Nocken erhebliche Preisvorteile ergeben und die Festigkeit und Dehnfähigkeit des Grundwerkstoffs nicht negativ im Sinne einer möglichen Versprödung beeinflußt werden. Die genannten Verfahrenschritte des thermischen Aufsinterns und des Auflegierens unter mechanischen Druck können in geeigneter Weise kombiniert werden, wobei der Effekt des Nachverdichtens der noch heißen Oberfläche ebenfalls einen positiven Einfluß hat. Das erfindungsgemäße Verfahren ist kostengünstig durchzuführen. Die erfindungsgemäßen Einzelnocken zeichnen sich durch verbesserte Eigenschaften gegenüber bisher bekannten Nocken aus Gußwerkstoff aus.

## Patentansprüche

1. Verfahren zur Herstellung von Einzelnocken für aufgebaute Nockenwellen, bei dem eine Stange mit dem Querschnitt einer Nocke hergestellt wird, von der einzelne Nocken abgetrennt werden,
dadurch gekennzeichnet,
daß die Stange im Stranggußverfahren mit einem Kern aus Kugelgraphitguß von gleichmäßiger Dicke über die gesamte axiale Länge und einer ausschließlich den Umfang bildenden Randschicht gleichmäßiger Dicke aus Hartguß mit ledeburitischen Gefüge hergestellt wird und die einzelnen Nocken von der erstarrten Stange abgetrennt werden.

2. Verfahren nach Anspruch 1,
dadurch gekennzeichnet,
daß die Stange mit geringem Schleifaufmaß in Bezug zur fertigen Nocke hergestellt wird.

3. Verfahren nach einem der Ansprüche 1 oder 2,
dadurch gekennzeichnet,
daß die einzelnen Nocken im Schmelzschnittverfahren vorzugsweise mit Fertigmaß in Bezug auf die Breite abgetrennt werden.

4. Verfahren nach einem der Ansprüche 1 bis 3,
dadurch gekennzeichnet,
daß eine Axialöffnung in den einzelnen abgetrennten Nocken durch Bohren oder Räumen erzeugt wird.

5. Verfahren nach einem der Ansprüche 1 bis 3,
dadurch gekennzeichnet,
daß eine axiale Durchgangsöffnung in der Stange beim Stranggießen erzeugt wird.

6. Verfahren nach einem der Ansprüche 1 bis 5,
dadurch gekennzeichnet,
daß die Stange nach dem Austritt aus einem ersten Formmundstück durch eine Pulverpackung aus Legierungselementen und anschließend durch ein weiteres beheiztes Formmundstück zum Auflegieren einer Laufschicht unter Aufschmelzen des anhaftenden Pulvers läuft.

7. Verfahren nach einem der Ansprüche 1 bis 5,
dadurch gekennzeichnet,
daß die Stange nach dem Austritt aus dem Formmundstück durch eine Pulverpackung und anschließend durch einen Ziehring zum Aufsintern der anhaftenden Pulverschicht läuft.

8. Verfahren nach Anspruch 7,
dadurch gekennzeichnet,
daß die Stange anschließend durch Walzen zum Verdichten der aufgesinterten Pulverschicht läuft.

9. Einzelnocken für eine gebaute Nockenwelle aus Gußwerkstoff mit harter Randschicht, insbesondere hergestellt nach dem Verfahren gemäß einem der Ansprüche 1 bis 8,
gekennzeichnet durch ein Kernmaterial mit einer Streckgrenze von ≧ 500 N/mm² und einer Bruchdehnung von ≧ 2 %.

10. Einzelnocken nach Anspruch 9,
gekennzeichnet durch eine Randschicht aus Hartguß mit einer Härte von ≧ 48 HRC und mit einer Dicke von 0,5 bis 2 mm.

11. Einzelnocken nach einem der Ansprüche 9 bis 10,
gekennzeichnet durch eine auflegierte oder aufgesinterte harte verschleißfeste Laufschicht mit karbidbildenden Werkstoffen, insbesondere Mangan, Chrom, Silizium, Wolfram, Vanadium, Molybdän, Titan, Nickel, Tantal, Niob und Kohlenstoff.

12. Einzelnocken nach einem der Ansprüche 9 bis 11,
gekennzeichnet
durch einen Übergangsbereich zwischen harter Randschicht und dem dehnfähigen Grundgefüge von ≦ 0,5 mm Dicke.

13. Einzelnocken nach einem der Ansprüche 9 bis 12,
gekennzeichnet
durch ein radiales Schleifaufmaß nach dem Stranggießen in Bezug auf den fertigen Nocken von ≦ 0,5 mm Dicke.

## Claims

1. A process for the production of individual cams for built-up cam shafts wherein a bar is produced, the cross-section of which corresponds to that of a cam and from which individual cams are separated, characterised in that the bar is produced by continuous casting to comprise a core composed of spheroidal graphite cast iron of uniform thickness over the whole of the axial length and an outer layer, which exclusively forms the periphery, of uniform thickness composed of chilled cast iron with a ledeburitic structure, and the individual cams are separated from the solidified bar.

2. A process as claimed in Claim 1, characterised in that the bar is produced with a small grinding allowance in relation to the finished cam.

3. A process as claimed in one of Claims 1 or 2, characterised in that the individual cams are separated by the fusion-cutting method preferably with the final dimensions in terms of their width.

4. A process as claimed in one of Claims 1 to 3, characterised in that an axial opening is produced in the individual separated cams by drilling or broaching.

5. A process as claimed in one of Claims 1 to 3, characterised in that an axial through-opening is produced in the bar during the continuous casting.

6. A process as claimed in one of Claims 1 to 5, characterised in that having issued from a first shaping mouthpiece, the bar passes through a powder packing composed of alloy elements and then through a further heated shaping mouthpiece to form an alloyed running layer by fusion of the adhering powder.

7. A process as claimed in one of Claims 1 to 5, characterised in that having issued from the shaping mouthpiece, the bar passes through a powder packing and then through a drawing die for the sintering of the adhering powder layer.

8. A process as claimed in Claim 7, characterised in that the bar then passes through rollers for the compression of the sintered powder layer.

9. An individual cam for a built-up cam shaft composed of cast material with a hard outer layer, produced in particular by the process according to one of Claims 1 to 8, characterised by a core material with a yield strength of ≧ 500 N/mm² and a breaking elongation of ≧ 2 %.

10. An individual cam as claimed in Claim 9, characterised by an outer layer composed of chilled cast iron with a hardness of ≧ 48 HRC and a thickness of 0.5 to 2 mm.

11. An individual cam as claimed in one of Claims 9 to 10, characterised by an alloyed or sintered, hard, wear-resistant running layer comprising carbide-forming materials, in particular manganese, chrome, silicon, tungsten, vanadium, molybdenum, titanium, nickel, tantalum, niobium and carbon.

12. An individual cam as claimed in one of Claims 9 to 11, characterised by a junction zone between the hard outer layer and the extensible basic structure of ≦ 0.5 mm thickness.

13. An individual cam as claimed in one of Claims 9 to 12, characterised by a radial grinding allowance after the continuous casting of ≦ 0.5 mm thickness in relation to the finished cam.

## Revendications

1. Procédé de fabrication de cames individuelles pour arbres à cames assemblés, dans lequel on forme une barre présentant la section transversale d'une came que l'on divise en cames individuelles, caractérisé en ce que la barre est fabriquée dans un procédé de coulée continue avec un coeur en fonte à graphite sphéroïdal d'épaisseur uniforme sur toute la longueur et avec une couche superficielle d'épaisseur uniforme, constituant exclusivement la périphérie, en fonte trempée à structure lédeburitique et en ce que les cames individuelles sont séparées de la barre solidifiée.

2. Procédé selon la revendication 1, caractérisé en ce que la barre est fabriquée avec une faible épaisseur de rectification par rapport à la came terminée.

3. Procédé selon l'une des revendications 1 ou 2, caractérisé en ce que les cames individuelles sont séparées au cours du procédé de découpage à fusion à la cote finale en ce qui concerne la largeur.

4. Procédé selon l'une des revendications 1 à 3, caractérisé en ce qu une ouverture axiale est formée par alésage ou brochage dans les cames individuelles séparées.

5. Procédé selon l'une des revendications 1 à 3, caractérisé en ce qu'une ouverture traversante axiale est formée dans la barre au cours de la coulée continue.

6. Procédé selon l'une des revendications 1 à 5, caractérisé en ce qu'après sa sortie d'un premier orifice de moule la barre traverse un garnissage de poudre constitué par des éléments d'alliage puis un autre orifice de moule chauffé pour la formation d'une couche de fonctionnement par alliage avec fusion de la poudre qui adhère.

7. Procédé selon l'une des revendications 1 à 5, caractérisé en ce qu'après sa sortie de l'orifice de moule la barre traverse un garnissage de poudre puis une lunette pour le frittage de la couche de poudre qui adhère.

8. Procédé selon la revendication 7, caractérisé en ce que la barre passe ensuite entre des cylindres pour la densification de la couche de poudre frittée.

9. Came individuelle pour arbre à cames assemblé en matière coulée présentant une couche superficielle dure, fabriquée notamment par le procédé selon l'une des revendications 1 à 8, caractérisée par un matériau de coeur présentant une limite d'étirage supérieure ou égale à 500 N/mm² et un allongement à la rupture supérieur ou égal à 2 %.

10. Came individuelle selon la revendication 9, caractérisée par une couche superficielle en fonte trempée d'une dureté supérieure ou égale à 48 unités de dureté Rockwell C et d'une épaisseur de 0,5 à 2 mm.

11. Came individuelle selon l'une des revendications 9 et 10, caractérisée par une couche de fonctionnement dure, résistante à l'usure, formée par alliage ou par frittage et comportant des matériaux formateurs de carbures, en particulier du manganèse, du chrome, du silicium, du tungstène, du vanadium, du molybdène, du titane, du nickel, du tantale, du niobium et du carbone.

12. Came individuelle selon l'une des revendications 9 à 11, caractérisée par un domaine de transition entre la couche superficielle dure et la structure de base dilatable d'une épaisseur inférieure ou égale à 0,5 mm.

13. Came individuelle selon l'une des revendications 9 à 12, caractérisée par une épaisseur de rectification radiale après la coulée continue d'une épaisseur inférieure ou égale à 0,5 mm par rapport à la came terminée.
